Europäisches Patentamt

European Patent Office

Office européen des brevets

(19)

(11) Veröffentlichungsnummer: **0 074 495**
**B1**

(12) # EUROPÄISCHE PATENTSCHRIFT

(45) Veröffentlichungstag der Patentschrift:
**19.06.85**

(51) Int. Cl.⁴: **C 08 F 6/12,** C 08 F 14/06,
C 08 J 3/14

(21) Anmeldenummer: **82107314.5**

(22) Anmeldetag: **12.08.82**

(54) **Verfahren zur Herstellung eines voluminösen, teilchenförmigen Vinylchloridpolymeren.**

(30) Priorität: **05.09.81 DE 3135198**

(43) Veröffentlichungstag der Anmeldung:
**23.03.83 Patentblatt 83/12**

(45) Bekanntmachung des Hinweises auf die Patenterteilung:
**19.06.85 Patentblatt 85/25**

(84) Benannte Vertragsstaaten:
**AT BE CH DE FR GB IT LI NL**

(56) Entgegenhaltungen:
**US - A - 4 166 171**

(73) Patentinhaber: **CHEMISCHE WERKE HÜLS AG, - RSP
Patente / PB 15 - Postfach 13 20, D-4370 Marl 1 (DE)**

(72) Erfinder: **Grundmann, Raban, Dr., Ludwigshafener
Strasse 6, D-4370 Marl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung beschreibt ein Verfahren, um ein voluminöses teilchenförmiges Polyvinylchlorid herzustellen, das als Dämmaterial verwendet werden kann.

Es ist Stand der Technik, Polymere aus ihrer Lösung auszufällen, indem man die Polymerlösung mit einer Flüssigkeit mischt, die das Polymere nicht löst. Dabei werden je nach Anordnung Pulver oder Fasern erhalten (s. z. B. Ullmanns Encyklopädie der technischen Chemie, 3. Auflage, Band 7, Seite 296).

Es ist auch bekannt, eine Polymerlösung in heißes, jedoch nicht kochendes Wasser einzudosieren, dabei das Lösungsmittel abzudampfen und das Polymere in wäßriger Suspension zu gewinnen (EP-A 11 416, Stauffer Chem. Comp.). Schließlich ist auch ein Verfahren bekannt, bei dem die Polymerlösung auf den bewegten Film eines Nichtlösers getropft wird und das Lösungsmittel bei Temperaturen von vorzugsweise 70 bis 85° C abgedampft wird (US-A 4 166 171, Goodyear Tire Rubber Comp.). Dieses Verfahren betrifft vorzugsweise die Aufarbeitung von Polyvinylchloridlösungen in Tetrahydrofuran durch Zugabe dieser Lösungen zu einer wäßrigen Salz- oder Glycerinlösung.

Die genannten Verfahren weisen folgenden Nachteil auf:

Bei den oben genannten Temperaturen des Nichtlösers von ca. 70 bis 95° C erfolgt die Verdampfung der Polymerlösung relativ langsam, so daß eine klebrige Zwischenstufe auftritt; das führt zum Zusammenbacken des gefällten Polymermaterials und zu Abscheidungen an der Rührvorrichtung. Außerdem ist die Volumenzunahme des gefällten Polyvinylchlorids relativ gering.

Ziel der Erfindung ist es, ein voluminöses, lockeres, nicht klebendes Fällungsprodukt zu erzeugen, das ein niedriges Schüttgewicht aufweist und als Wärmedämmaterial eingesetzt werden kann. Eine weitere Forderung ist auf die Schwerbrennbarkeit des erzeugten Materials gerichtet.

Diese Aufgabenstellung wird erfindungsgemäß gelöst durch ein Verfahren, wie es in den Patentansprüchen dargestellt ist.

Es war zu erwarten, daß durch den Temperaturschrumpf, wie er beispielsweise von Fasern bekannt ist, ein relativ kompaktes Material erhalten wird. Überraschenderweise wird dieser Effekt durch das rasche Verdampfen des Lösungsmittels überkompensiert, so daß ein voluminöses, nicht klebendes, teilchenförmiges Produkt resultiert.

Im einzelnen besteht das Verfahren aus folgenden Schritten: Herstellen der PVC-Lösung, Fällen in heißem Nichtlöser, Abtrennen und Trocknen des Produktes.

Als Ausgangsmaterial werden Homo- oder Copolymerisate des Vinylchlorids verwendet. Comonomere, wie Vinylacetate, Acrylate, Vinylether, Acrylnitril, Maleinsäure, Fumarsäureester, Vinylidenchlorid, Propylen, Ethylen können bis zu 20 Molprozent im Polyvinylchlorid enthalten sein. Außerdem eignen sich nachchlorierte PVC-Typen mit Chlorgehalten bis zu 65% besonders für das Verfahren.

Die Homo- und Copolymerisate des Vinylchlorids können durch alle bekannten Methoden hergestellt werden, z. B. durch Massepolymerisation, Emulsionspolymerisation, Suspensions-, Mikrosuspensionspolymerisation und Lösungspolymerisation, wie sie in der Monographie »Polyvinylchlorid und Vinylchlorid-Mischpolymerisate« von H. Kainer, Springer-Verlag Berlin/Heidelberg/New York (1965) beschrieben sind, und zwar die Massepolymerisation auf Seite 7 bis 10, die Emulsionspolymerisation auf den Seiten 34 bis 59, die Suspensionspolymerisation auf den Seiten 12 bis 34 und die Lösungspolymerisation auf den Seiten 10 bis 11.

Die Polymeren werden in geeigneten Lösemitteln, die einen Siedepunkt unter 160° C, vorzugsweise unter 100° C, bei Normaldruck aufweisen sollten, gelöst.

Als Lösemittel eignen sich beispielsweise Ether, wie Tetrahydrofuran, Dibutylether, Dioxan, Ester, wie Ethylacetat, Ethylpropionat, Ethylencarbonat, Ketone, wie Aceton, Cyclohexanon, Methylethylketon, Methylisobutylketon, 2-Pentanon, 3-Pentanon, Cyclopentanon, Chlorkohlenwasserstoffe, wie Methylenchlorid, Tetrachlorethan, Tetrachlorkohlenstoff, Dichlorethan, 1,1,1-Trichlorethan, Aromaten, wie Benzol, Toluol, oder polare Flüssigkeiten, wie Schwefelkohlenstoff, die in reiner Form oder als Mischungen verwendet werden. Bevorzugt werden die Lösungsmittel, die aus der Faserherstellung von PVC bekannt sind, eingesetzt, z. B. Tetrahydrofuran (THF), Cyclohexanon oder Mischungen, wie THF/Butylacetat, THF/Methylenchlorid, $CS_2$/Aceton, $CS_2$/Methylenchlorid, Aceton/Benzol.

Die Lösungen sollten Konzentrationen von 1 bis 25 Gewichtsprozent aufweisen; vorzugsweise verwendet man eine 5- bis 15%ige Lösung in Tetrahydrofuran.

Als Nichtlösemittel eignen sich Flüssigkeiten, die Polyvinylchlorid weder lösen noch anquellen und einen Siedepunkt >100° C, vorzugsweise >120° C, bei Normaldruck aufweisen. Gute Ergebnisse erzielt man mit Glykolen, wie Ethylenglykol, Propylenglykol, Polyglykolen, wie Diethylenglykol, Triethylenglykol, mehrwertigen Alkoholen, wie Glycerin, Alkoholen, wie n-Hexanol, Carbonsäuren, wie Essigsäure oder Propionsäure.

Auch die Verwendung der wäßrigen Lösungen von anorganischen Salzen, wie z. B. von NaCl, $CaCl_2$, $KNO_3$, $MgSO_4$, Naacetat oder von wäßrigen Lösungen organischer Zusätze, wie z. B. von Mischungen Glykol/Wasser, Glycerin/Wasser, ist mit gutem Ergebnis möglich.

Der Nichtlöser wird bei 100 bis 180° C vorgelegt, vorzugsweise verwendet man Glykol bei einer Temperatur von 120 bis 160° C.

Kennzeichnend für das Verfahren ist, daß die Temperatur des Nichtlösers unabhängig vom gewählten Druck 40 bis 120° C und vorzugsweise 60 bis 100° C über dem Siedepunkt des Lösungsmittels liegt.

**0 074 495**

Die Fällung des PVC kann in sehr unterschiedlichen Apparaturen durchgeführt werden. So gewinnt man das voluminöse Material am einfachsten, indem man die PVC-Lösung in die gerührte, aufgeheizte Vorlage des Nichtlösers tropft und das Lösungsmittel abdestilliert und kondensiert. Besonders günstige Ergebnisse hinsichtlich des Raumgewichtes werden erhalten, wenn die PVC-Lösung mit Hilfe einer Einstoff- oder Zweistoffdüse unter Druck oder mit Treibgas bzw. Treibdampf versprüht wird. Die Zugabe der Polymerlösung erfolgt also vorteilhaft in Tropfenform, als dünner Strahl oder als Nebel.

Die Schüttdichte des Fällungsproduktes wird durch die Temperatur des Nichtlösers, die Konzentration der PVC-Lösung, die Art der Dosiervorrichtung und der Michvorrichtung beeinflußt. Obwohl sich keine strengen Regeln zu Erzielung des maximalen Schüttvolumens aufstellen lassen, gilt, daß die Senkung der Konzentration der PVC-Lösung und die Zudosierung in feinverteilter Form zu niedrigen Schüttdichten, während für die Temperatur des Nichtlösers im beanspruchten Temperaturbereich ein von den Versuchsparametern abhängiges Optimum ermittelt werden kann, das im allgemeinen bei 120 bis 160° C liegt.

Der Nichtlöser wird durch eine übliche Rührvorrichtung oder in Form eines ablaufenden Flüssigkeitsfilmes in Bewegung gehalten. Das Verfahren kann chargenweise oder kontinuierlich durchgeführt werden. Die Anwendung von Druck oder Vakuum bei der Fällung ist möglich, jedoch ist die Arbeitsweise bei Normaldruck bevorzugt.

Die Abtrennung des ausgefällten, voluminösen Polyvinylchlorids erfolgt durch Filter, Siebvorrichtungen oder Zentrifugieren. Reste des Nichtlösemittels können durch Waschen mit Wasser entfernt werden. Das Trocknen erfolgt durch Verblasen mit Luft, Vakuumtrocknen, Aufheizen bis 120° C oder einer Kombination der genannten Möglichkeiten.

Die Verwendung von Wärme- bzw. Lichtstabilisatoren vor oder nach der Fällung ist in vielen Fällen vorteilhaft. Beispiele sind: zinnorganische Verbindungen, Epoxyverbindungen, Benztriazole, Triazinderivate, Salicylsäurederivate und sterisch gehinderte Amine.

Das Fällungsprodukt liegt in Form von Flocken oder Fasern vor und weist Schüttgewichte von 10 bis 200 g/l, vorzugsweise von 20 bis 80 g/l, auf. Durch Mahlen in einer Mühle kann es in beliebig feine Teilchen zerkleinert werden, jedoch ist damit eine Erhöhung des Schüttgewichtes verbunden.

Die Schüttdichten wurden durch Einfüllen des Fällungsproduktes in einen 1 l-Standzylinder (30 cm Höhe) ohne Rütteln oder Verdichten und anschließendes Auswiegen ermittelt.

Das Gewicht der gefällten PVC-Partikel ist naturgemäß von der Konzentration der Lösung und der Dosiervorrichtung abhängig. Die einzelnen Partikel wiegen weniger als 1 g, vorzugsweise weniger als 0,1 g. Die Mehrzahl der Teilchen liegt im Bereich 100 bis 0,01 mg, vorzugsweise 10 bis 0,1 mg. Bei gemahlenen Produkten liegt das maximale Partikelgewicht unter 10 mg, vorzugsweise unter 1 mg. Die Mehrzahl der Teilchen liegt im Bereich 1 bis 0,0001 mg, vorzugsweise 0,1 bis 0,001 mg.

Lose Schüttungen des Materials haben eine Wärmeleitfähigkeit von R = 0,035 bis 0,045 [W/mK]. Das voluminöse Material weist ebenso wie Hart-PVC selbstverlöschende Eigenschaften auf.

Die erhaltenen Materialien dienen zur Herstellung von schwerbrennbaren Wärmedämmstoffen sowie zur Schallisolierung, Polsterung oder Verpackung zerbrechlicher Güter. Sie können in Form loser Teilchen oder zu Schaumstoffen verbunden vorliegen. Natürlich ist auch die Kombination mit anderen Dämm- und Füllstoffen sowie die Herstellung von mehrschichtigen Verbundmaterialien möglich. Das Verfahren kann insbesondere zur Aufarbeitung von PVC-Abfällen eingesetzt werden.

Beispiel 1

A) Herstellung des Polyvinylchlorids:
In einem Druckautoklav werden 2 700 Teile Vinylchlorid in Gegenwart von 4 650 Teilen Wasser, 0,2 Teilen eines Gelluloseethers, 0,11 Teilen eines Teilesters eines Polyols und 0,2 Teilen Dilauroylperoxid bei 55° C und einem Druck von 8 bar Überdruck (atü) unter Rühren 8 Stunden polymerisiert. Der Autoklav wird auf Normaldruck entspannt und 30 Minuten auf 150 Torr (0,19 bar) evakuiert. K-Wert:70.

B) In einer 4 l-Rührapparatur mit Tropftrichter und Destillationsbrücke werden 2 l Ethylenglykol auf 150° C aufgeheizt. Man tropft bei dieser Temperatur unter Rühren im Verlauf von 2 Stunden eine Lösung von 50 g Polyvinylchlorid in 950 g Tetrahydrofuran (= 5%ige Lösung) zu. Während Tetrahydrofuran abdestilliert und kondensiert wird, scheidet sich das Polyvinylchlorid in flockiger Form ab. Es wird filtriert, mit Wasser und Methanol gewaschen und im Vakuumheizschrank bei Temperaturen bis 100° C getrocknet. Ethylenglykol und Tetrahydrafuran sind für weitere Versuche wieder verwendbar. Ausbeute: 49 g Polyvinylchlorid; Schüttdichte: 40 g/l. Die größten PVC-Partikel wiegen 0,1 bis 0,2 g. Die Auswaage von 50 durchschnittlichen Teilchen ergab 300 mg, das ergibt ein mittleres Teilchengewicht von 6 mg.

Vergleichsversuch

Bei gleicher Arbeitsweise, jedoch einer Temperatur des Ethylenglykols von 95 bis 100° C, destilliert nur sehr wenig Tetrahydrofuran über, das Polyvinylchlorid fällt klebrig aus und wickelt sich um den Rührer.

3

**0 074 495**

Beispiel 2a

In einem 6 l-Rührkolben mit Tropftrichter und Destillationsaufsatz werden 3 l Glykol und 1 l Wasser bei 120°C vorgelegt. Eine Lösung von 50 g PVC in 950 g Tetrahydrofuran wird unter Rühren zugetropft. Während das abgedampfte THF in der Destillationsvorlage aufgefangen wird, scheidet sich das PVC in Form feiner Flocken ab. Nach dem Abtrennen über eine Nutsche, dem Waschen mit Wasser und dem Trocknen im Heißluftofen bei 100°C erhält man ein voluminöses, weißes Material der Schüttdichte 18 g/l.

Durch Mahlen in einer Stiftsmühle (Fa. Alpine, Typ 160 Z) steigt die Schüttdichte auf 22 g/l an. Das Gewicht von 100 Teilchen beträgt 0,2 mg, d. h. die Teilchen wiegen im Mittel 0,002 mg.

Beispiel 2b

Entsprechend Beispiel 1 wird eine Lösung von 50 g Polyvinylchlorid in 720 g Tetrahydrofuran und 230 g Methylenchlorid in 2 l Ethylenglykol bei 140°C ausgefällt. Die Aufarbeitung erfolgt analog Beispiel 1. Schüttdichte: 31 g/l.

Beispiel 3

Ein Kilogramm einer 15%igen Lösung von Polyvinylchlorid in Tetrahydrofuran wird mit Hilfe einer Kolbenpumpe über Metalleitungen mit 5 bar Druck durch eine 0,2 mm Düse in eine Vorlage aus 2 l Ethylenglykol (von 160°C) gesprüht. Das Glykol befindet sich in einem 4 l-Rührkolben mit aufgesetzter Destillationsbrücke und -vorlage zum Auffangen des abdestillierten Tetrahydrofurans. Nach dem Abkühlen des Glykols wird das voluminöse Fällungsprodukt durch ein feinmaschiges Sieb abfiltriert und mit Wasser gewaschen. Man erhält nach dem Trocknen 146 g gefälltes Polyvinylchlorid mit der Schüttdichte 36 g/l.

Beispiel 4

Ein Liter einer 5%igen Lösung von Polyvinylchlorid in Tetrahydrofuran wird entsprechend Beispiel 3 mit 3 bar Druck über eine 0,1 mm Düse als feiner Strahl in eine 135°C heiße, gerührte Glykolvorlage dosiert. Die Aufarbeitung erfolgt wie in den vorangegangenen Beispielen. Man erhält ein feinfaseriges Material der Schüttdichte 22 g/l.

Beispiel 5

Eine 10%ige Lösung von nachchloriertem Polyvinylchlorid (Chlorgehalt: 65%) in Tetrahydrofuran wird in einer Apparatur entsprechend Beispiel 1 bei 120°C, 140°C und 160°C in Ethylenglykol getropft. Nach dem Abtrennen, Waschen und Trocknen erhält man folgende Schüttdichten:

| Temperatur des Glykols: | 120°C | Schüttdichte: | 87 g/l |
|---|---|---|---|
| | 140°C | | 83 g/l |
| | 160°C | | 120 g/l |

Beispiel 6

1000 g einer 5%igen Tetrahydrofuranlösung eines Copolymerisats aus Vinylchlorid/Vinylacetat (95/5) werden gemäß Beispiel 1 bei 130°C in Glykol ausgefällt. Nach dem Abtrennen, Waschen und Trocknen erhält man 48,5 g eines flockigen, elastischen Materials. Schüttdichte: 29 g/l.

**Patentansprüche**

1. Verfahren zur Herstellung eines voluminösen, teilchenförmigen Vinylchloridpolymeren durch Ausfällen einer Lösung des Polymeren in einem erwärmten bewegten Nichtlösemittel unter Abdestillieren des Lösemittels, dadurch gekennzeichnet, daß das Nichtlösemittel einen Siedepunkt > 100°C bei Normaldruck aufweist und die Temperatur des Nichtlösemittels 40 bis 120°C oberhalb des Siedepunktes des Lösemittels liegt, jedoch 100°C nicht unter- und 180°C nicht überschreitet.

2. Verfahren nach Anspruch 1, dadurch gekennzeichnet, daß die Temperatur des Nichtlösemittels 60 bis 100°C oberhalb des Siedepunktes des Lösemittels liegt, jedoch 100°C nicht unter- und 180°C nicht

4

überschreitet.

3. Verfahren nach Anspruch 1, dadurch gekennzeichnet, daß man eine Lösung von Polyvinylchlorid in Tetrahydrofuran bei 120° C bis 160° C in Ethylenglykol ausfällt.

4. Verfahren nach den Ansprüchen 1 und 2, dadurch gekennzeichnet, daß das Ausfällen der Polymerlösung dadurch bewirkt wird, daß man die Polymerlösung durch Düsen versprüht oder verspinnt.

## Claims

1. A process for the production of a voluminous, particulate vinyl chloride polymer by subjecting a solution of the polymer to precipitation in a heated, stirred non-solvent whilst removing the solvent by distillation, characterised in that the non-solvent has a boiling point above 100° C at normal pressure and the temperature of the non-solvent is 40 to 120° C above the boiling point of the solvent but does not fall below 100° C nor rise above 180° C.

2. A process according to claim 1, characterised in that the temperature of the non-solvent is 60 to 100° C above the boiling point of the solvent but does not fall below 100° C nor rise above 180° C.

3. A process according to claim 1, characterised in that a solution of polyvinylchloride in tetrahydrofuran is subjected to precipitation in ethylene glycol at 120 to 160° C.

4. A process according to claim 1 or 2, characterised in that the precipitation of the polymer solution is carried out by spraying the polymer solution through nozzles or causing it to spin.

## Revendications

1. Procédé de préparation d'un polymère volumineux de chlorure de vinyle sous forme de particules, par précipitation d'une solution du polymère dans un non-solvant chauffé et en mouvement, avec élimination du solvant par distillation, caractérisé par le fait que le non-solvant présente un point d'ébullition supérieur à 100° C à la pression normale et que la température du non-solvant se situe de 40 à 120° C au-dessus du point d'ébullition du solvant, mais n'est pas inférieure à 100° C et n'est supérieure à 180° C.

2. Procédé selon la revendication 1, caractérisé par le fait que la température du non-solvant est supérieure de 60 à 100° C au point d'ébullition du solvant, mais n'est pas inférieure à 100° C et n'est pas supérieure à 180° C.

3. Procédé selon la revendication 1, caractérisé par le fait que l'on précipite dans l'éthylèneglycol, à une température de 120 à 160° C, une solution de polychlorure de vinyle dans le tétrahydrofuranne.

4. Procédé selon les revendications 1 et 2, caractérisé par le fait que l'on assure la précipitation de la solution de polymère en pulvérisant la solution de polymère par des buses ou en la filant.